# EUROPEAN PATENT SPECIFICATION

(11) **EP 3 231 835 B1**
(45) Date of publication and mention of the grant of the patent: **05.06.2019**
(21) Application number: 17165742.2
(22) Date of filing: 10.04.2017
(51) Int. Cl.: C08J 5/12, F01D 5/28

(54) **ORGANIC MATRIX COMPOSITE THERMAL BARRIER COATING**
WÄRMEDÄMMSCHICHT AUS VERBUNDWERKSTOFF MIT ORGANISCHER MATRIX
REVÊTEMENT DE BARRIÈRE THERMIQUE COMPOSITE À MATRICE ORGANIQUE

(30) Priority: 11.04.2016 US 201615095235
(43) Date of publication of application: 18.10.2017
(73) Proprietor: United Technologies Corporation, Farmington, CT 06032 (US)
(72) Inventor: Barron, Alan C., Jupiter, FL Florida 33458 (US); Masloski, James, Lake Worth, FL Florida 33467 (US); Riehl, John D., Hebron, CT Connecticut 06248 (US)
(74) Representative: Dehns

(56) References cited:
- EP-A2- 2 192 098
- WO-A1-2013/188516
- US-A1- 2013 189 531
- US-A1- 2015 197 456

## Description

### BACKGROUND

The present disclosure relates to the manufacture of a turbine engine component comprising a modified organic matrix composite having a thermal barrier coating.

Organic matrix composites (OMCs) are used in the aerospace industry for the weight reductions they offer when used to replace metal components. However, exposure to high temperature environments promotes oxidative degradation which effectively leads to reduced mechanical mechanical properties. Thus, even currently known high temperature OMCs utilizing high temperature matrix materials have limited application.

One solution to protecting the OMC structures from the high temperature environments is to apply advanced ceramic thermal barrier coatings.

Thermal protection systems in the form of thermal barrier coatings (TBCs) have been used with metals for many years. In such cases, low thermal conductivity materials are coated on the surface of the part to create a thermal gradient between the high temperature environment and the part such that the subsurface material is not exposed to a temperature above its maximum use temperature. However, OMCs present surface features and material attributes that are separate and unique from metallic substrates.

In applications involving aerospace turbine engine components, plasma sprayed thermal barrier coatings do not readily adhere well to a typical carbon fiber based organic matrix composite (OMC). As a result, surface features of the OMC require modification in order to improve adhesion. Proper surface preparation is widely recognized as critical to long term bond performance and commonly embodies the application of a mechanical process such as grit blasting or hand abrasion to remove surface contaminants and to roughen the surface to increase the effective area of the attachment. Poorly controlled abrasion risks exposure of the bare carbon fiber which, due to its relative non-polar nature, would negatively impact bondability. Excessive abrasion risks further damage of the carbon reinforcement leading to degraded and compromised capability. More recently, alternative surface preparation work has been performed utilizing nonconventional techniques such as laser or plasma treatment which target the functionalization of the composite surface so as to increase surface energy and improve interactions between material interfaces. While surface modification might be desirable and even necessary, it undoubtedly will add cost and complexity. Furthermore, the degree of surface roughening must be properly controlled to preclude underlying fiber damage. The end result of limited surface modification is poor coating adhesion that ultimately restricts the use of ceramic thermal barrier coatings on OMC aerospace turbine engine components.

### SUMMARY

In accordance with the present disclosure, there is provided a process for manufacturing a turbine engine component (e.g. a turbine engine component as herein described), the process comprising the steps of providing a substrate, the substrate comprising an organic matrix composite; applying a roughness layer to the substrate; coating the roughness layer with a bonding layer; and coating the bonding layer with a thermal barrier coating.

In another and alternative embodiment, the process further comprises roughening the roughness layer.

In another and alternative embodiment, the roughening step comprises exposing silica based material fibers.

The roughness layer comprises a single sheet of silica based glass fabric. Suitable materials for the roughness layer include fabrics sold commercially under the trade names Astro-quartz and Nextel.

The bonding layer comprises 80 percent aluminum and 20 percent silicon.

In another and alternative embodiment, the substrate comprises layered sheets of carbon fiber suspended within organic matrix solid.

Other details of the modified organic matrix composite having a thermal barrier coating are set forth in the following detailed description and the accompanying drawing wherein like reference numerals depict like elements.

### BRIEF DESCRIPTION OF THE DRAWINGS

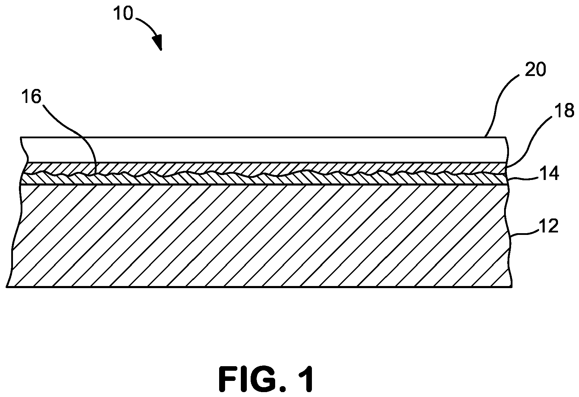

FIG. 1 is a schematic representation of a modified organic matrix composite with thermal barrier coating.

### DETAILED DESCRIPTION

Referring to the drawing, FIG. 1 shows a component 10 for particular use in high temperature environments such as a gas turbine engine. Component 10 includes a substrate 12 having a roughness sheet or layer 14. A surface 16 of the roughness layer 14 is opposite the substrate 12. A bonding layer 18 is applied to the surface 16 of the roughness layer 14. A thermal barrier coating (TBC) 20 is coupled to the bonding layer 18 opposite the roughness layer 14. The thermal barrier coating 20 can be exposed to temperatures of up to about 725° F. (385° C).

The substrate 12 is formed from organic matrix composite materials. Organic matrix composite structures are constructed from layered sheets of carbon fiber suspended within an organic matrix solid. In an exemplary aspect, the OMC matrix material is a high temperature polyimide system. It is contemplated that in alternative aspects the substrate 12 can include lower temperature resin systems such as bismaleimide-based polyimide systems (BMI) (e.g., Cycom® 5250-4).

The roughness layer 14 comprises a single sheet of Nextel, Astro-quartz or other silica based glass fabric as the outermost, last composite layer of the OMC. The roughness layer 14 enables very aggressive surface roughening, that otherwise would not be performed on the OMC, due to the negative impact of surface modification to the OMC. The roughness layer 14 protects the substrate 12 OMC materials. The roughness layer 14 prevents the negative adhesive capability impact on the OMC substrate materials as well. It is desirable to expose the fibers of the roughness layer 14, in order to enhance coating adhesion and durability. The roughness layer 14 is configured to receive surface feature modification in order to improve adhesion.

The thermal barrier coating 20 can be selected to optimize the bond and match the coefficient of thermal expansion (CTE) of the substrate 12. It is also desirable to choose coating materials, 18, 20 that are a good match to the silica based fabric with respect to adhesion and durability. The bonding layer 18 comprises 80 percent aluminum and 20 percent silicon.

By including the last sheet of silica based fabric, any aggressive surface roughening that exposes the silica based fibers, results in a beneficial adhesion benefit over and above that obtained by just roughening alone. It is also desirable to expose the fiber of the roughness layer 14 to enhance coating adhesion and durability.

The choice of 80% aluminum/ 20% silicon as a bonding layer material, coupled with the silica based fabric layer has resulted in excellent adhesion and durability as shown by long duration, high temperature cyclic exposure test results.

There has been provided a modified organic matrix composite having a thermal barrier coating. While the modified organic matrix composite having a thermal barrier coating has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A process for manufacturing a turbine engine component, said process comprising the steps of:
providing a substrate, said substrate comprising an organic matrix composite;
applying to said substrate a roughness layer comprising a single sheet of silica based glass fabric;
coating said roughness layer with a bonding layer comprising 80 percent aluminum and 20 percent silicon; and
coating said bonding layer with a thermal barrier coating suitable for exposure to temperatures of up to 385°C.

2. The process of claim 1, further comprising roughening said roughness layer.

3. The process of claim 1 or claim 2, wherein said roughening step comprises exposing silica based material fibers.

4. The process of any preceding claim, wherein said substrate comprises layered sheets of carbon fiber suspended within organic matrix solid.

## Patentansprüche

1. Verfahren zur Herstellung einer Komponente eines Turbinentriebwerks, wobei das Verfahren die folgenden Schritte umfasst:
Bereitstellen eines Substrats, wobei das Substrat einen Verbundwerkstoff mit organischer Matrix umfasst;
Aufbringen einer Rauigkeitsschicht, die eine einzelne Bahn von Glasgewebe auf Siliziumdioxidbasis umfasst, auf das Substrat;
Beschichten der Rauigkeitsschicht mit einer Haftschicht, die 80 Prozent Aluminium und 20 Prozent Silizium umfasst; und Beschichten der Haftschicht mit einer Wärmedämmschicht, die geeignet ist, um Temperaturen von bis zu 385 °C ausgesetzt zu werden.

2. Verfahren nach Anspruch 1, ferner umfassend das Aufrauen der Rauigkeitsschicht.

3. Verfahren nach Anspruch 1 oder Anspruch 2, wobei der Schritt des Aufrauens das Freilegen der Fasern des Materials auf Siliziumdioxidbasis umfasst.

4. Verfahren nach einem der vorstehenden Ansprüche, wobei das Substrat geschichtete Platten von Kohlenstofffasern, die innerhalb fester organischer Matrix suspendiert sind, umfasst.

## Revendications

1. Procédé de fabrication d'un composant de moteur à turbine, ledit procédé comprenant les étapes de :
fourniture d'un substrat, ledit substrat comprenant un composé à matrice organique ;
l'application audit substrat d'une couche de rugosité comprenant une feuille unique de tissu de verre à base de silice ;
le revêtement de ladite couche de rugosité avec une couche de liaison comprenant 80 pour cent d'aluminium et 20 pour cent de silicium ; et
le revêtement de ladite couche de liaison avec un revêtement de barrière thermique convenant à une exposition à des températures allant jusqu'à 385 °C.

2. Procédé selon la revendication 1, comprenant en outre la rugosification de ladite couche de rugosité.

3. Procédé selon la revendication 1 ou la revendication 2, dans lequel l'étape de rugosification comprend l'exposition de fibres de matériau à base de silice.

4. Procédé selon une quelconque revendication précédente, dans lequel ledit substrat comprend des feuilles en couche de fibre de carbone mises en suspension au sein d'un solide à matrice organique.
